# EUROPEAN PATENT APPLICATION

(11) **EP 4 266 792 A1**
(43) Date of publication of application: **25.10.2023**
(21) Application number: 22738930.1
(22) Date of filing: 07.01.2022
(51) Int. Cl.: H04W 72/04

(54) **ELECTRONIC DEVICE AND METHOD FOR WIRELESS COMMUNICATION, AND COMPUTER-READABLE STORAGE MEDIUM**

(30) Priority: 14.01.2021 CN 202110047927
(71) Applicant: Sony Group Corporation, Tokyo 108-0075 (JP)
(72) Inventor: WANG, Xinlin, Beijing 100027 (CN); PENG, Yuyan, Beijing 100027 (CN); CAO, Jianfei, Beijing 100027 (CN); LIU, Min, Beijing 100027 (CN); XU, Jin, Beijing 100027 (CN)
(74) Representative: D Young & Co LLP
(86) International application number: PCT/CN2022/070681
(87) International publication number: WO 2022/152049

(57) **Abstract**

The present disclosure provides an electronic device and method for wireless communication, and a computer-readable storage medium. The electronic device comprises: a processing circuit, which is configured to: generate downlink control information used for indicating a unified transmission configuration indication (TCI) state, the downlink control information comprising at least one of downlink control information used for uplink scheduling and newly defined downlink control information, wherein the unified TCI state is used to indicate both downlink beams and uplink beams; and send the downlink control information to a user equipment.

## Description

This application claims the priority to Chinese Patent Application No. 202110047927.0 titled "ELECTRONIC DEVICE AND METHOD FOR WIRELESS COMMUNICATION, AND COMPUTER-READABLE STORAGE MEDIUM", filed on January 14, 2021 with the China National Intellectual Property Administration (CNIPA), which is incorporated herein by reference in its entirety.

### FIELD

The present disclosure relates to the technical field of wireless communications, and in particular to beam management technology in a wireless communication system. More specifically, the present disclosure relates to an electronic apparatus and a method for wireless communications and a computer-readable storage medium.

### BACKGROUND

In a 5G New Radio (NR) communication system, beam indication for uplink and downlink is an important aspect in beam management. In the existing Re1.15/Re1.16 of 5G, different Quasi CoLocation (QCL) types are defined for downlink. The beam indication for the downlink is performed based on a QCL and a transmission configuration indication (TCI) state. The beam indication for the uplink is achieved by defining a spatial relation between the uplink and a reference signal.

In a case of considering the delay, performance of a beam indication mechanism based on downlink control information (DCI) is better than performance of a beam indication mechanism based on a media access control control element (MAC CE). However, it is difficult to ensure the reliability.

In addition, a concept of a unified TCI state is proposed in a 3GPP RANI conference, which supports a unified TCI state indication for the union of uplink and downlink and unified TCI state indications separately for uplink and downlink. However, the existing TCI state indication mechanism is only applicable to the downlink.

### SUMMARY

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

According to an aspect of the present disclosure, an electronic apparatus for wireless communications is provided. The electronic apparatus includes processing circuitry. The processing circuitry is configured to: generate DCI for indicating a unified TCI state, where the DCI includes at least one of DCI for uplink scheduling and newly defined DCI, and the unified TCI state is used to indicate both an uplink beam and a downlink beam; and transmit the DCI to user equipment (UE).

According to another aspect of the present disclosure, a method for wireless communications is provided. The method include: generating DCI for indicating a unified TCI state, where the DCI includes at least one of DCI for uplink scheduling and newly defined DCI, and the unified DCI state is used to indicate both an uplink beam and a downlink beam; and transmitting the DCI to LTE.

According to an aspect of the present disclosure, an electronic apparatus for wireless communications is provided. The electronic apparatus includes processing circuitry. The processing circuitry is configured to: receive DCI for indicating a unified TCI state from a base station, where the DCI includes at least one of DCI for uplink scheduling and newly defined DCI, and the unified DCI state is used to indicate both an uplink beam and a downlink beam; and determine the unified TCI state based on the DCI.

According to another aspect of the present disclosure, a method for wireless communications is provided. The method includes: receiving DCI for indicating a unified TCI state from a base station, where the DCI includes at least one of DCI for uplink scheduling and newly defined DCI, and the unified DCI state is used to indicate both an uplink beam and a downlink beam; and determining the unified TCI state based on the DCI.

According to other aspects of the present disclosure, there are further provided computer program codes and computer program products for implementing the methods for wireless communications above, and a computer-readable storage medium having recorded thereon the computer program codes for implementing the methods for wireless communications described above.

With the electronic apparatuses and the methods according to the embodiments of the present disclosure, the unified TCI state can be indicated by DCI, reducing the delay.

These and other advantages of the present disclosure will be more apparent through the following detailed description of the preferred embodiments of the present disclosure in combination with the accompanying drawings.

### BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:
Figure 1 shows a block diagram of functional modules of an electronic apparatus for wireless communications according to an embodiment of the present disclosure;
Figure 2 shows an exemplary schematic diagram of a hybrid automatic retransmission request mechanism according to an embodiment of the present disclosure;
Figure 3 shows an exemplary schematic diagram of a hybrid automatic retransmission request mechanism according to an embodiment of the present disclosure;
Figure 4 shows an exemplary schematic diagram of a hybrid automatic retransmission request mechanism according to an embodiment of the present disclosure;
Figure 5 shows an exemplary schematic diagram of a hybrid automatic retransmission request mechanism according to an embodiment of the present disclosure;
Figure 6 shows a block diagram of functional modules of an electronic apparatus for wireless communications according to another embodiment of the present disclosure;
Figure 7 shows a flow chart of a method for wireless communications according to an embodiment of the present disclosure;
Figure 8 shows a flow chart of a method for wireless communications according to an embodiment of the present disclosure;
Figure 9 is a block diagram showing a first example of an exemplary configuration of an eNB or gNB to which the technology of the present disclosure may be applied;
Figure 10 is a block diagram showing a second example of an exemplary configuration of an eNB or gNB to which the technology of the present disclosure may be applied;
Figure 11 is a block diagram showing an example of an exemplary configuration of a smartphone to which the technology according to the present disclosure may be applied;
Figure 12 is a block diagram showing an example of an exemplary configuration of a car navigation apparatus to which the technology according to the present disclosure may be applied; and
Figure 13 is a block diagram of an exemplary block diagram illustrating the structure of a general purpose personal computer capable of realizing the method and/or device and/or system according to the embodiments of the present disclosure.

### DETAILED DESCRIPTION OF EMBODIMENTS

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a service, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

### <First Embodiment>

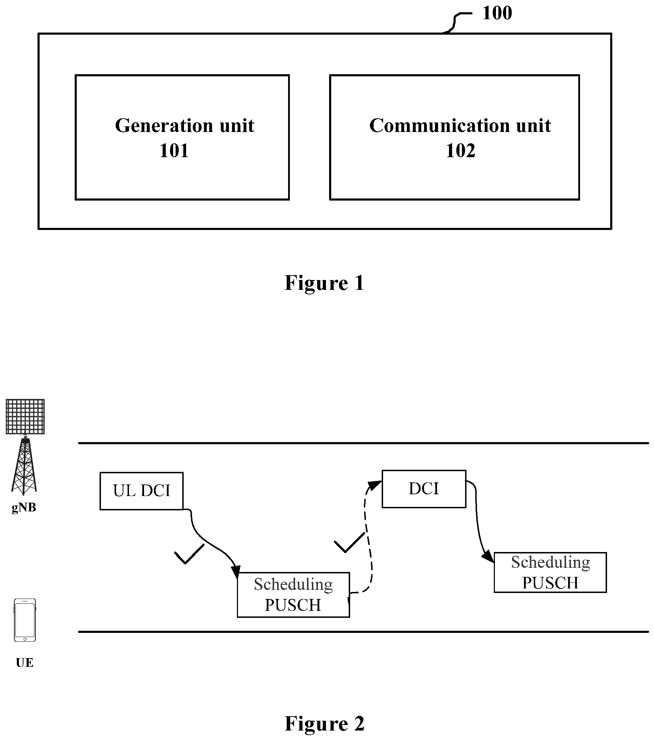

Figure 1 shows a functional block diagram of an electronic apparatus 100 for wireless communications according to an embodiment of the present disclosure. As shown in Figure 1, the electronic apparatus 100 includes a generation unit 101 and a communication unit 102. The generation unit 101 is configured to generate DCI for indicating a unified TCI state. The DCI includes at least one of DCI for uplink scheduling and newly defined DCI. The unified TCI state is used to indicate both an uplink beam and a downlink beam. The communication unit 102 is configured to transmit the DCI to LTE.

The generation unit 101 and the communication unit 102 may be implemented by one or more processing circuitry, and the processing circuitry, for example, may be implemented as a chip or a processor. In addition, it should be understood that, functional units in the apparatus shown in Figure 1 are only logic modules which are divided based on the specific functions thereof, and are not intended to limit the implementations.

The electronic apparatus 100, for example, may be arranged on a base station side or may be communicatively connected to a base station. The base station described in the present disclosure may be a transmit receive point (TRP) or an access point (AP). It should be further noted that the electronic apparatus 100 may be implemented at a chip level or a device level. For example, the electronic apparatus 100 may function as a base station itself, and may further include an external device such as a memory and a transceiver (not shown in Figure 1). The memory may store programs and related data information for implementing various functions by the base station. The transceiver may include one or more communication interfaces to support communication with different devices (for example, UE, other base stations or the like). The implementation of the transceiver is not limited herein.

As described above, the unified TCI state is used to indicate both an uplink beam and a downlink beam. In the embodiment, at least one of downlink control information for uplink scheduling (UL DCI) and newly defined DCI is proposed to be used to indicate the unified TCI state.

In a first example, the DCI for indicating a unified TCI state includes UL DCI. The UL DCI includes a sounding reference signal resource indicator (SRI) and a unified TCI state identifier. The UL DCI is obtained by performing extension based on the existing UL DCI format. Specifically, the UL DCI in the example may be obtained by extending DCI format 0_1/0_2.

The SRI included in the existing DCI format 0_1/0_2 plays an important role. The SRI is used to indicate a spatial relation of a sounding reference signal (SRS) followed by a physical uplink shared channel (PUSCH), and is further used to uplink power control of the PUSCH and transmission antenna port selection for the PUSCH and the like.

In the example, in addition to the SRI, the UL DCI further includes the unified TCI state identifier. The unified TCI state identifier is used to indicate a beam of the PUSCH, and the SRI is used to at least indicate the uplink power control for the PUSCH and the transmission antenna port selection for the PUSCH. The indication mode in this example may be referred to as an extended mode.

In addition, in order to improve the transmission reliability of the DCI, the communication unit 102 is further configured to apply a hybrid automatic retransmission request (HARQ) mechanism.

For example, in a case that the UE correctly receives the UL DCI according to the example and a base station correctly receives a PUSCH transmitted by the UE, the communication unit 102 feeds back a hybrid automatic retransmission request acknowledgement (HARQ-ACK) to the UE. Figure 2 shows a schematic diagram of a HARQ mechanism in this case. In Figure 2, a base station (gNB) transmits LTL DCI including a unified TCI state identifier to UE, the LTE correctly receives the LTL DCI and performs data transmission on a scheduled PUSCH, and then the gNB correctly receives the PUSCH and performs implicit ACK feedback in the next DCI. For example, an inverted new data indicator (NDI) is used to represent the ACK, and the ACK has a same HARQ process ID as the scheduled PUSCH.

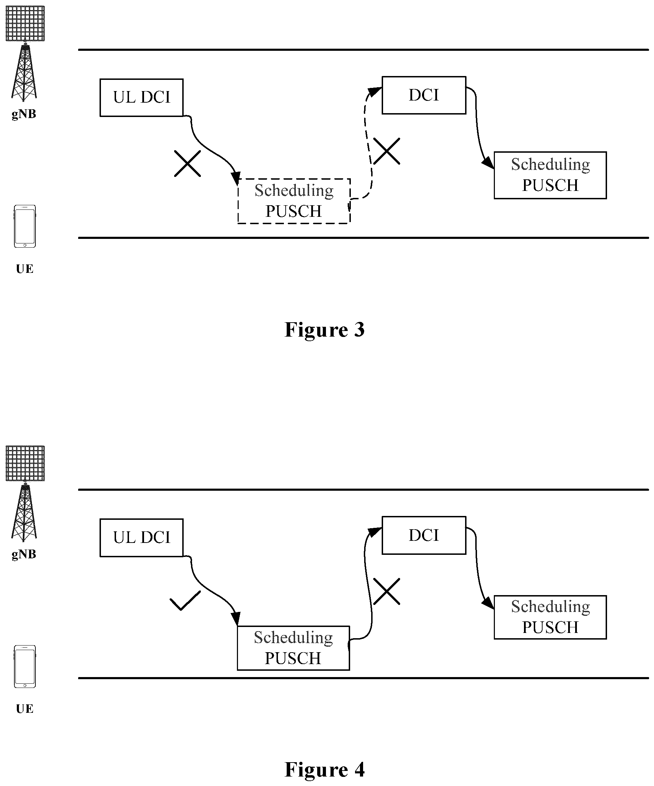

In a case that the LTE does not correctly receive the LTL DCI and thus cannot transmit a PUSCH, the communication unit 102 feeds back an HARQ-NACK to the UE. Figure 3 shows a schematic diagram of a HARQ mechanism in this case. In Figure 3, a gNB transmits UL DCI including a unified TCI state identifier to UE, the UE does not correctly receive the UL DCI and thus cannot transmit a PUSCH to the gNB, and then the gNB performs implicit NACK feedback in the next DCI. For example, an uninverted NDI may be used to represent the NACK, and the NACK has a same HARQ process ID as the scheduled PUSCH.

In a case that the LTE correctly receives the LTL DCI and a base station does not correctly receive a PUSCH transmitted by the UE, the communication unit 102 feeds back an HARQ-ACK for the UL DCI and an HARQ-NACK for the PUSCH to the UE. Figure 4 shows a schematic diagram of a HARQ mechanism in this case. In Figure 4, a gNB transmits UL DCI including a unified TCI state identifier to UE, the UE correctly receives the UL DCI and performs data transmission on a scheduled PUSCH, but the gNB cannot correctly decode the PUSCH. At this time, the gNB determines that the UE has correctly received the UL DCI including the unified TCI state identifier and the LTE has transmitted a corresponding PUSCH, and thus the gNB transmits an ACK for the LTL DCI and an NACK for the PUSCH. For example, an inverted NDI may be used to represent the ACK, an uninverted NDI may be used to represent the NACK, and the ACK and the NACK have a same HARQ process ID as the scheduled PUSCH.

It can be seen that in the HARQ mechanisms shown in Figures 2 to 4, the HARQ-ACK and the HARQ-NACK are included in other DCI after the UL DCI. With the HARQ mechanism, the transmission reliability of the DCI can be effectively improved. After the UE receives an implicit HARQ feedback, the unified TCI state indicated by the UL DCI is to be applied after a time period, and the duration of the time period depends on the capability of the UE.

In a second example, the DCI for indicating the unified TCI state includes UL DCI, the UL DCI includes an SRI, and the SRI is associated with the unified TCI state. In this example, the format of the existing UL DCI is not changed, but the SRI is associated with the unified TCI state, that is, SRS resources indicated by the SRI are associated with the unified TCI state, thereby obtaining the corresponding SRS resources while indicating the unified TCI state. For example, the communication unit 102 may associate the SRI with the unified TCI state through high-level signaling such as radio resource control (RRC) signaling or MAC CE. The indication mode in this example may be referred to as an association mode.

The HARQ mechanisms described above with reference to Figures 2 to 4 may also be applied to the second example, and are not repeated herein.

In a third example, the DCI for indicating the unified TCI state includes newly defined DCI. The newly defined DCI is dedicated to indicating the unified TCI state, and is not used for scheduling the data transmission on uplink and downlink. The communication unit 102 may scramble the newly defined DCI with a radio network temporary indicator (RNTI).

In the newly defined DCI, irrelevant parts in the original DCI may be optimized or deleted to reduce signaling overhead. The DCI may be used to indicate multiple kinds of TCI states. For example, the DCI may indicate a unified TCI state the union of uplink and downlink, may indicate a unified TCI state separately for uplink and downlink, may indicate a unified TCI state common for multiple signals/channels, or may indicate a unified TCI state for a single signal/channel.

The newly defined DCI at least includes a unified TCI state identifier. In addition, the newly defined DCI may further include one or more of the following according to requirements: a channel/signal application for indicating an uplink and downlink channel/signal and a component carrier (CC) or a bandwidth part (BWP) where the uplink and downlink channel/signal is; a physical uplink control channel (PUCCH) resource identifier for indicating PUCCH resources used by the UE in feeding back an HARQ-ACK; a physical downlink control channel (PDCCH)-to-PUCCH timing (PDCCH_to_PUCCH_timing) for indicating a time period from transmitting the newly defined DCI to transmitting, by the UE, a PUCCH for feeding back the HARQ-ACK; and a channel status information (CSI) request field for aperiodically triggering a downlink CSI feedback.

Specifically, the base station notifies the LTE through the channel/signal application of one or more channels/signals to which the unified TCI state indicated by the UE is to be applied and the CC or BWP where the channels/signals are, notifies the UE through the PUCCH resource identifier which PUCCH resources may be used to feed back the HARQ-ACK which is used to confirm that the UE has correctly received the newly defined DCI, and notifies the UE through the PDCCH-to-PUCCH timing of a timing relation between transmitting the newly defined DCI to feeding back the HARQ-ACK.

In addition, the base station may further trigger aperiodic downlink CSI reporting through a CSI request field. Specifically, the newly defined DCI may trigger transmission of aperiodic CSI-RS through the CSI request field included in the newly defined DCI, then the LTE measures the aperiodic CSI-RS and reports a measurement result to the base station, that is, reports the aperiodic CSI. The aperiodic CSI reports and related parameters are pre-configured, for example, through RRC signaling. For example, three aperiodic CSI reports are configured through RRC signaling, and each of the reports includes measurement resources of the aperiodic CSI. The CSI request field herein may be 2 bits, for example, 01, 10, 11 respectively correspond to one of the three aperiodic CSI reports. 00 is reserved to indicate that there is no aperiodic CSI report, that is, indicates that none of the three aperiodic CSI reports is triggered.

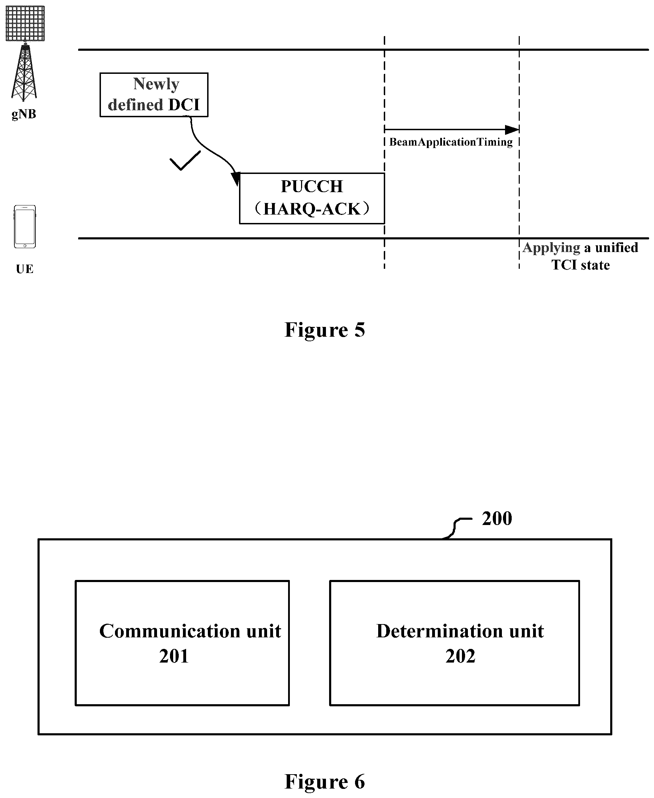

In the third example, in order to improve the transmission reliability of the newly defined DCI, the HARQ mechanism may be similarly applied. Figure 5 shows a schematic diagram of a HARQ mechanism applied to the third example. Figure 5 shows in a case in which UE correctly receives newly defined DCI, the communication unit 102 receives an HARQ-ACK from the UE transmitted using a PUCCH. In addition, in a case that a UE does not correctly receive the newly defined DCI, the communication unit 102 does not receive a feedback of the HARQ from the UE. In a case that the UE does not correctly receive the newly defined DCI, but correctly receives other DCI for downlink scheduling and feeds back an HARQ-ACK, an HARQ-NACK for the newly defined DCI is received from the UE, that is, the HARQ-NACK for the newly defined DCI is attached to the HARQ-ACK for other DCI for downlink scheduling for transmission.

In addition, the communication unit 102 may further receive a parameter of BeamApplicationTiming from the UE. The parameter of BeamApplicationTiming indicates a time period required from the UE transmitting the HARQ-ACK to the unified TCI state indicated by the newly defined DCI being applied, as shown in the example in Figure 5. In other words, after the UE transmits the HARQ-ACK to the base station, the unified TCI state indicated by the newly defined DCI is to be applied after the time period indicated by the BeamApplicationTiming. The duration indicated by the BeamApplicationTiming depends on the capability of the UE.

In a fourth example, in addition to the newly defined DCI, the DCI for indicating the unified TCI state further includes LTL DCI. The LTL DCI includes an SRI for indicating SRS resources, and the unified TCI state identifier indicates a spatial relation of the SRS resources. In other words, in the example, the SRS resources are indicated by the UL DCI, and the spatial relation of the SRS resources is dynamically updated by using the newly defined DCI, thus realizing expected beam indication. The indication mode in the example may be referred to as an indirect mode.

The HARQ mechanisms in the first example and the second example and/or the HARQ mechanism in the third example may be applied to this example.

In the Rel.15/Rel.16, four QCL types are defined for a downlink signal to indicate a same attribute between two downlink reference signals. In applying the unified TCI state to uplink, it is required to define a new QCL type, that is, a QCL type for uplink. For example, the following three QCL types may be defined: a QCL Type X for defining that two reference signals have a same time advance (TA); a QCL Type Y for defining that two reference signals have a same path loss (PL); and a QCL Type Z for defining a direction in which the uplink beam is transmitted. It should be understood that the QCL type X, the QCL type Y and the QCL type Z herein are only exemplary, and neither the name nor the meaning is restrictive. The DCI according to the embodiment may include one or more QCL types for uplink, for example, to indicate a same attribute of two uplink reference signals.

In summary, the electronic apparatus 100 according to the embodiment may indicate the unified TCI state through the DCI, reducing the delay, and may further improve the transmission reliability of the DCI by applying the HARQ mechanism. In addition, the QCL type for uplink is further defined in the embodiment.

### <Second Embodiment>

Figure 6 shows a functional block diagram of an electronic apparatus 200 for wireless communications according to another embodiment of the present disclosure. As shown in Figure 6, the electronic apparatus 200 includes a communication unit 201 and a determination unit 202. The communication unit 201 is configured to receive, from a base station, DCI for indicating a unified TCI state. The DCI includes at least one of DCI for uplink scheduling (UL DCI) and newly defined DCI. The unified DCI state is used to indicate both an uplink beam and a downlink beam. The determination unit 202 is configured to determine the unified TCI state based on the DCI.

The communication unit 201 and the determination unit 202 may be implemented by one or more processing circuitry, and the processing circuitry, for example, may be implemented as a chip or a processor. In addition, it should be understood that, functional units in the apparatus shown in Figure 6 are only logic modules which are divided based on the specific functions thereof, and are not intended to limit the implementations.

The electronic apparatus 200, for example, may be arranged on the LTE side or may be communicatively connected to LTE. It should be further noted that the electronic apparatus 200 may be implemented at a chip level or a device level. For example, the electronic apparatus 200 may function as UE itself, and may include an external device such as a memory and a transceiver (not shown in Figure 6). The memory may store programs and related data information for implementing various functions by the user equipment. The transceiver may include one or more communication interfaces to support communication with different devices (for example, a base station, other user equipment or the like). The implementation of the transceiver is not limited herein.

Similar to the first embodiment, the DCI for indicating the unified TCI state may be in various forms.

In a case that the DCI for indicating the unified TCI state includes UL DCI, the UL DCL may include an SRI and a unified TCI state identifier. For example, the unified TCI state identifier indicates a beam of the PUSCH, and the SRI at least indicates the uplink power control for the PUSCH and the transmission antenna port selection for the PUSCH. The UL DCI may be obtained by extending the DCI format 0_1/0_2. The indication mode of the DCI may be referred to as an extended mode.

In a case that the DCI for indicating the unified TCI state includes UL DCI, the UL DCL may be also configured to include an SRI. The SRI is associated with the unified TCI state. That is, after the LTE obtains the SRI, for example, the determination unit 202 may determine SRS resources and a corresponding unified TCI state simultaneously. The communication unit 201 may receive high-level signaling which associates the SRI and the unified TCI state, where the high-level signaling includes, for example, RRC signaling or MAC CE. The indication mode of the DCI may be referred to as an association mode.

In a case that the DCI for indicating the unified TCI state includes the newly defined DCI, the newly defined DCI is dedicated to indicating the unified TCI state and is not used for scheduling data transmission on uplink and downlink. The newly defined DCI includes at least a unified TCI state identifier. In addition, the newly defined DCI, according to requirements, may include one or more of: a channel/signal application for indicating an uplink and downlink channel/signal and a component carrier or a BWP where the uplink and downlink channel/signal is; a PUCCH resource identifier for indicating PUCCH resources used by the LTE in feeding back an HARQ-ACK; a PDCCH-to-PUCCH timing for indicating a time period from transmitting the newly defined DCI to transmitting, by the UE, a PUCCH to feedback the HARQ-ACK; and a CSI request field for aperiodically triggering a downlink CSI feedback.

Specifically, the determination unit 202 may determine one or more channels/signals to which the indicated unified TCI state is to be applied and a CC or BWP where each of the channels/signals is based on the channel/signal application; may determine which PUCCH resources are to be used to feed back HARQ-ACK based on the PUCCH resource identifier, where the HARQ-ACK is used to confirm that the UE has correctly receives the newly defined DCI; and may determine a timing relation from transmitting the newly defined DCI to feeding back the HARQ-ACK based on the PDCCH-to-PUCCH timing.

In addition, the determination unit 202 may further determine whether and how to report the aperiodic downlink CSI based on the CSI request field. Specifically, the aperiodic CSI report and related parameters are pre-configured, for example, through RRC signaling. For example, three aperiodic CSI reports are configured through RRC signaling, and each of the reports includes measurement resources of the aperiodic CSI. The CSI request field herein may be 2 bits, for example, 01, 10, 11 respectively correspond to one of the three aperiodic CSI reports. 00 is reserved to indicate that there is no aperiodic CSI report, that is, indicates that none of the three aperiodic CSI reports is triggered. For example, assuming that the CSI request field is 01, the UE determines a certain aperiodic CSI report is to be performed based on the CSI request field value, and determines the measurement resources for the aperiodic CSI report based on configuration of aperiodic CSI reports received through the RRC signaling, and measures the aperiodic CSI-RS on the measurement resources and reports a measurement result to the base station.

In addition, the communication unit 201 is further configured to transmit a parameter of BeamApplicationTiming to a base station. The parameter of BeamApplicationTiming indicates a time period required from the UE transmitting the HARQ-ACK to the unified TCI state indicated by the newly defined DCI being applied. The parameter of BeamApplicationTiming depends on the capability of the UE. After the UE transmits the HARQ-ACK to the base station, the unified TCI state indicated by the newly defined DCI is applied after the time period indicated by BeamApplicationTiming elapses.

In addition, in a case that the DCI for indicating the unified TCI state includes the newly defined DCI, the DCI for indicating the unified TCI state may further include the UL DCI, where the UL DCI includes an SRI for indicating SRS resources, and the unified TCI state identifier included in the newly defined DCI indicates a spatial relation of the SRS resources. Specifically, the UE determines SRS resources based on the UL DCI, determines a unified TCI state based on the newly defined DCI, and then updates a spatial relation of the SRS resources based on the unified TCI state, thus realizing expected beam indication. The indication mode of the DCI may be referred to as an indirect mode.

The HARQ mechanism may be applied in the above modes to improve the transmission reliability of the DCI, and has been described in the first embodiment with reference to Figures 2 to 5 in detail. Herein, only corresponding operations performed by the communication unit 201 at the UE side are briefly described.

In a case that the DCI for indicating the unified TCI state includes the UL DCI, the communication unit 201 may perform the following operations: transmitting a PUSCH to the base station if the UL DCI is correctly received, and receiving an HARQ-ACK from the base station if the base station correctly receives the PUSCH transmitted by the UE; receiving an HARQ-NACK from the base station if the UE does not correctly receive the UL DCI and thus cannot transmit a PUSCH; and transmitting a PUSCH to the base station if the UL DCI is correctly received, and receiving an HARQ-ACK for the UL DCI and an HARQ-NACK for the PUSCH from the base station if the base station does not correctly receive the PUSCH transmitted by the UE. For example, the HARQ-ACK and the HARQ-NACK may be included in other DCI after the UL DCI.

In a case that the DCI for indicating the unified TCI state includes the newly defined DCI, the communication unit 201 may perform the following operations: transmitting an HARQ-ACK to the base station if the newly defined DCI has been correctly received; not transmitting a feedback for the HARQ to the base station if the newly defined DCI is not correctly received; and transmitting an HARQ-ACK for other DCI while transmitting an HARQ-NACK for the newly defined DCI to the base station if the newly defined DCI is not correctly received but the other DCI for downlink scheduling is correctly received.

In a case that the DCI for indicating the unified TCI state includes the UL DCI and the newly defined DCI, the communication unit 201 may achieve the HARQ mechanism by performing the operations in both of the above two cases or in any one of the above two cases.

As described above, in applying the unified TCI state to uplink, it is required to define a new QCL type, that is, a QCL type for uplink. For example, the following three QCL types may be defined: a QCL Type X for defining that two reference signals have a same TA, a QCL Type Y for defining that two reference signals have a same PL, and a QCL Type Z for defining a direction in which the uplink beam is transmitted. It should be understood that the QCL type X, the QCL type Y and the QCL type Z herein are only exemplary, and neither the name nor the specific meaning of the QCL type X, the QCL type Y and the QCL type Z is restrictive. The DCI according to the embodiment may include one or more QCL types for uplink. The determination unit 202, for example, may determine a same attribute of two uplink reference signals based on the QCL type.

In summary, the electronic apparatus 200 according to the embodiment may indicate the unified TCI state through the DCI, reducing the delay, and may further improve the transmission reliability of the DCI by applying the HARQ mechanism.

### < Third Embodiment>

In the above description of embodiments of the electronic apparatuses for wireless communications, it is apparent that some processing and methods are further disclosed. In the following, a summary of the methods are described without repeating details that are described above. However, it should be noted that although the methods are disclosed when describing the electronic apparatuses for wireless communications, the methods are unnecessary to adopt those components or to be performed by those components described above. For example, implementations of the electronic apparatuses for wireless communications may be partially or completely implemented by hardware and/or firmware. Methods for wireless communications to be discussed blow may be completely implemented by computer executable programs, although these methods may be implemented by the hardware and/or firmware for implementing the electronic apparatuses for wireless communications.

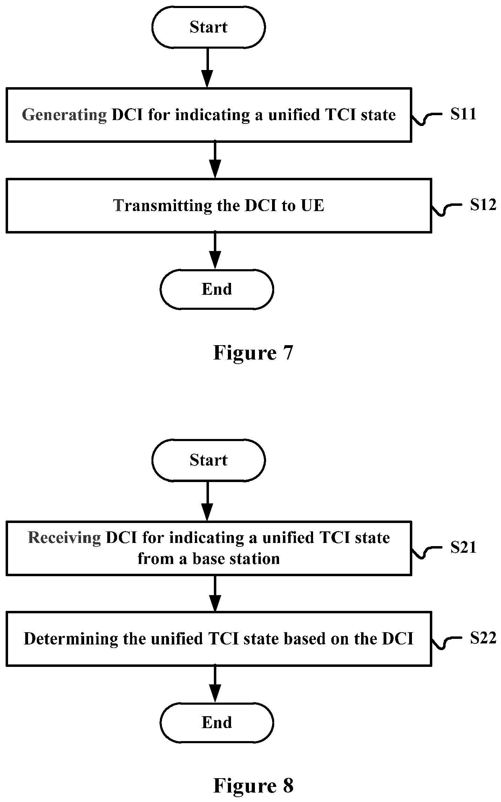

Figure 7 shows a flow chart of a method for wireless communications according to an embodiment of the present disclosure. The method includes: generating DCI for indicating a unified TCI state (S11), where the DCI includes at least one of UL DCI and newly defined DCI, and the unified DCI state is used to indicate both an uplink beam and a downlink beam; and transmitting the DCI to UE (S12). The method, for example, may be performed at a base station side.

In a first example, the DCI for indicating a unified TCI state includes UL DCI. The UL DCI includes an SRI and a unified TCI state identifier. For example, the unified TCI state identifier indicates a beam for a PUSCH, and the SRI at least indicates uplink power control for the PUSCH and transmission antenna port selection for the PUSCH. The UL DCI may be obtained by extending a DCI format 0_1/0_2.

In a second example, the DCI for indicating the unified TCI state includes UL DCI. The UL DCI includes an SRI. The SRI is associated with the unified TCI state. The SRI may be associated with the unified TCI state through high-level signaling such as RRC signaling or an MAC CE.

In a third example, the DCI for indicating the unified TCI state includes a newly defined DCI. The newly defined DCI is dedicated to indicating the unified TCI state and at least includes a unified TCI state identifier. In addition, the newly defined DCI may further include one or more of: a channel/signal application for indicating an uplink and downlink channel/signal and a component carrier or a bandwidth part where the uplink and downlink channel/signal is; a PUCCH resource identifier for indicating PUCCH resources used by the UE in feeding back an HARQ-ACK; a PDCCH-to-PUCCH timing for indicating a time period from transmitting the newly defined DCI to transmitting, by the LTE, a PUCCH to feedback the HARQ-ACK; and a CSI request field for aperiodically triggering a downlink CSI feedback. The newly defined DCI may be scrambled with a RNTI.

In addition, the above method may further include: receiving a parameter of BeamApplicationTiming from the UE. The parameter of BeamApplicationTiming indicates a time period from the UE transmitting the HARQ-ACK to the unified TCI state indicated by the newly defined DCI being applied.

In a fourth example, in addition to the newly defined DCI, the DCI for indicating the unified TCI state further includes LTL DCI. The LTL DCI includes an SRI for indicating SRS resources. The unified TCI state identifier indicates a spatial relation of the SRS resources.

In addition, the method further includes applying a HARQ mechanism to improve the transmission reliability of the DCI.

For example, if the DCI for indicating the unified TCI state includes the UL DCI, the method includes: in a case that the LTE correctly receives the LTL DCI and a base station correctly receives a PUSCH transmitted by the UE, feeding back an HARQ-ACK to the UE; in a case that the LTE does not correctly receive the LTL DCI and thus cannot transmit a PUSCH, feeding back an HARQ-NACK to UE; and in a case that the UE correctly receives the UL DCI and a base station does not correctly receive a PUSCH transmitted by the UE, feeding back an HARQ-ACK for the UL DCI and an HARQ-NACK for the PUSCH to the UE. For example, the HARQ-ACK and the HARQ-NACK may be included in other DCI after the UL DCI.

If the DCI for indicating the unified TCI state includes the newly defined DCI, the method includes: receiving an HARQ-ACK from the UE in a case that the UE correctly receives the newly defined DCI; not receiving an HARQ feedback from the UE in a case that the LTE does not correctly receive the newly defined DCI; and receiving an HARQ-NACK for the newly defined DCI from the UE in a case that the UE does not correctly receive the newly defined DCI but correctly receives other UL DCI and feeds back an HARQ-ACK.

The DCI may further include a QCL type for uplink. The QCL type includes one or more of: a QCL Type X for defining that two reference signals have a same time advance, a QCL Type Y for defining that two reference signals have a same path loss, and a QCL Type Z for defining a direction in which the uplink beam is transmitted.

Figure 8 shows a flow chart of a method for wireless communications according to an embodiment of the present disclosure. The method includes: receiving DCI for indicating a unified TCI state from a base station (S21), where the DCI includes at least one of LTL DCI and newly defined DCI, and the unified DCI state is used to indicate both an uplink beam and a downlink beam; and determining the unified TCI state based on the DCI (S22). The method, for example, may be performed at UE side.

The forms of the DCI for indicating the unified DCI state are described in detail in the above method performed at the base station side, and are not repeated herein.

In addition, an HARQ mechanism may be applied to improve the transmission reliability of the DCI.

In a case that the DCI for indicating the unified DCI state includes the UL DCI, the method performed at the LTE side further includes: transmitting a PUSCH to the base station in a case that the UL DCI is correctly received, and receiving an HARQ-ACK from the base station in a case that the base station correctly receives the PUSCH transmitted by the UE; receiving an HARQ-NACK from the base station in a case that the UE does not correctly receive the UL DCI and thus cannot transmit a PUSCH; and transmitting a PUSCH to the base station in a case that the LTL DCI is correctly received, and receiving an HARQ-ACK for the UL DCI and an HARQ-NACK for the PUSCH from the base station in a case that the base station does not correctly receive the PUSCH transmitted by the UE. For example, the above HARQ-ACK and HARQ-NACK may be included in other DCI after the UL DCI.

In a case that the DCI for indicating the unified DCI state includes the newly defined DCI, the method performed at the LTE side further includes: transmitting an HARQ-ACK to the base station in a case that the newly defined DCI is correctly received; not transmitting a feedback for the HARQ to the base station in a case that the newly defined DCI is not correctly received; and transmitting an HARQ-ACK for other DCI while transmitting an HARQ-NACK for the newly defined DCI to the base station in a case that the newly defined DCI is not correctly received and the other DCI for downlink scheduling is correctly received.

It should be noted that the above methods may be used in combination or separately. The methods have been described in detail in the first embodiment and the second embodiment, and are not repeated herein.

The technology according to the present disclosure may be applicable to various products.

For example, the electronic apparatus 100 may be implemented as various base stations. The base station may be implemented as any type of evolution node B (eNB) or gNB (a 5G base station). The eNB includes, for example, a macro eNB and a small eNB. The small eNB may be an eNB covering a cell smaller than a macro cell, such as a pico eNB, a micro-eNB and a home (femto) eNB. The situation is similar to the gNB. Alternatively, the base station may also be implemented as a base station of any other type, such as a NodeB and a base transceiver station (BTS). The base station may include a main body (that is also referred to as a base station device) configured to control wireless communications, and one or more remote radio heads (RRH) arranged in a different place from the main body. In addition, various types of user equipment each may operate as the base station by performing functions of the base station temporarily or semi-permanently.

The electronic apparatus 200 may be implemented as various user equipments. The user equipment may be implemented as a mobile terminal (such as a smart phone, a tablet personal computer (PC), a notebook PC, a portable game terminal, a portable/dongle-type mobile router, and a digital camera), or an in-vehicle terminal (such as a car navigation apparatus). The user equipment may further be implemented as a terminal (that is also referred to as a machine type communication (MTC) terminal) that performs machine-to-machine (M2M) communication. Furthermore, the user equipment may be a wireless communication module (such as an integrated circuit module including a single chip) mounted on each of the terminals.

### [Application Examples Regarding a Base Station]

### (First application example)

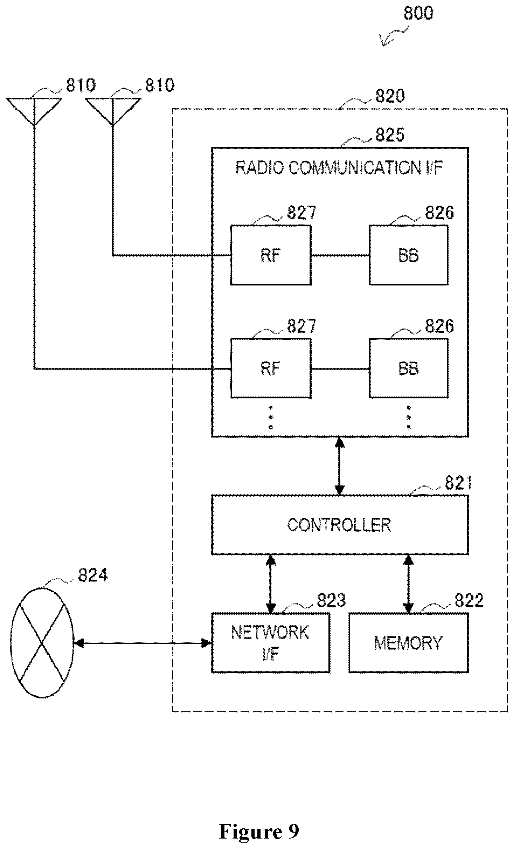

Figure 9 is a block diagram showing a first example of an exemplary configuration of an eNB or gNB to which the technology according to the present disclosure may be applied. It should be noted that the following description is given by taking the eNB as an example, which is also applicable to the gNB. An eNB 800 includes one or more antennas 810 and a base station apparatus 820. The base station apparatus 820 and each of the antennas 810 may be connected to each other via a radio frequency (RF) cable.

Each of the antennas 810 includes a single or multiple antennal elements (such as multiple antenna elements included in a multiple-input multiple-output (MIMO) antenna), and is used for the base station apparatus 820 to transmit and receive wireless signals. As shown in Figure 9, the eNB 800 may include the multiple antennas 810. For example, the multiple antennas 810 may be compatible with multiple frequency bands used by the eNB 800. Although Figure 9 shows the example in which the eNB 800 includes the multiple antennas 810, the eNB 800 may include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as resource control, radio bearer control, mobility management, admission control and scheduling. The control may be performed in corporation with an eNB or a core network node in the vicinity. The memory 822 includes a RAM and a ROM, and stores a program executed by the controller 821 and various types of control data (such as a terminal list, transmission power data and scheduling data).

The network interface 823 is a communication interface for connecting the base station apparatus 820 to a core network 824. The controller 821 may communicate with a core network node or another eNB via the network interface 823. In this case, the eNB 800, and the core network node or another eNB may be connected to each other via a logic interface (such as an S1 interface and an X2 interface). The network interface 823 may also be a wired communication interface or a wireless communication interface for wireless backhaul. In a case that the network interface 823 is a wireless communication interface, the network interface 823 may use a higher frequency band for wireless communication than that used by the radio communication interface 825.

The radio communication interface 825 supports any cellular communication scheme (such as Long Term Evolution (LTE) and LTE-advanced), and provides wireless connection to a terminal located in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and perform various types of signal processing of layers (such as L1, Media Access Control (MAC), Radio Link Control (RLC), and a Packet Data Convergence Protocol (PDCP)). The BB processor 826 may have a part or all of the above-described logical functions, to replace the controller 821. The BB processor 826 may be a memory storing communication control programs, or a module including a processor and a related circuit configured to execute the programs. Updating the program may allow the functions of the BB processor 826 to be changed. The module may be a card or a blade inserted into a slot of the base station apparatus 820. Alternatively, the module may be a chip mounted on the card or the blade. Meanwhile, the RF circuit 827 may include, for example, a mixer, a filter, and an amplifier, and transmits and receives wireless signals via the antenna 810.

As shown in Figure 9, the radio communication interface 825 may include multiple BB processors 826. For example, the multiple BB processors 826 may be compatible with multiple frequency bands used by the eNB 800. The radio communication interface 825 may include multiple RF circuits 827, as shown in Figure 9. For example, the multiple RF circuits 827 may be compatible with multiple antenna elements. Although Figure 9 shows the example in which the radio communication interface 825 includes multiple BB processors 826 and multiple RF circuits 827, the radio communication interface 825 may include a single BB processor 826 and a single RF circuit 827.

In the eNB 800 shown in Figure 9, the communication unit 102 and the transceiver of the electronic apparatus 100 may be implemented by the radio communication interface 825. At least a part of the functions may be implemented by the controller 821. For example, the controller 821 may perform the functions of the generation unit 101 and the communication unit 102 to indicate the unified TCI state through the DCI.

### (Second application example)

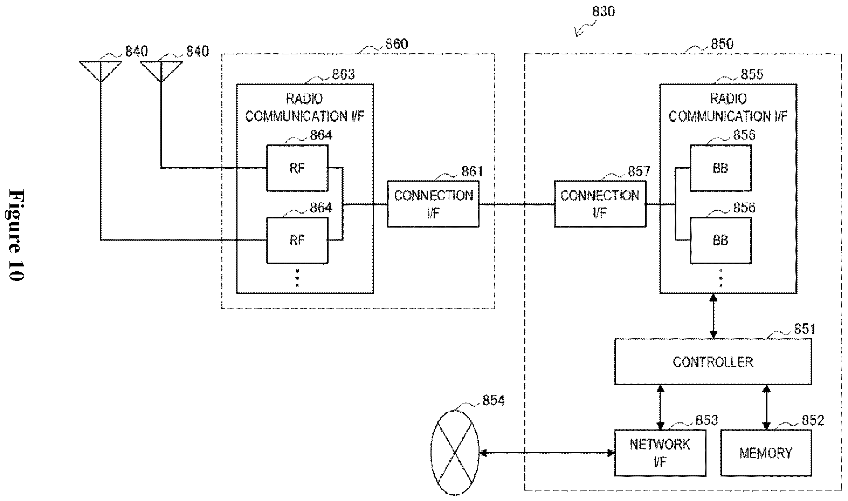

Figure 10 is a block diagram showing a second example of a schematic configuration of an eNB or gNB to which the technology of the present disclosure can be applied. It should be noted that the following description is given by taking the eNB as an example, which is also applied to the gNB. An eNB 830 includes one or more antennas 840, a base station apparatus 850, and an RRH 860. The RRH 860 and each of the antennas 840 may be connected to each other via an RF cable. The base station apparatus 850 and the RRH 860 may be connected to each other via a high speed line such as an optical fiber cable.

Each of the antennas 840 includes a single or multiple antennal elements (such as multiple antenna elements included in an MIMO antenna), and is used for the RRH 860 to transmit and receive wireless signals. As shown in Figure 10, the eNB 830 may include multiple antennas 840. For example, the multiple antennas 840 may be compatible with multiple frequency bands used by the eNB 830. Although Figure 10 shows the example in which the eNB 830 includes multiple antennas 840, the eNB 830 may include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 9.

The radio communication interface 855 supports any cellular communication scheme (such as LTE and LTE-advanced), and provides wireless communication to a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 9, except that the BB processor 856 is connected to an RF circuit 864 of the RRH 860 via the connection interface 857. As shown in Figure 10, the radio communication interface 855 may include multiple BB processors 856. For example, the multiple BB processors 856 may be compatible with multiple frequency bands used by the eNB 830. Although Figure 10 shows the example in which the radio communication interface 855 includes multiple BB processors 856, the radio communication interface 855 may include a single BB processor 856.

The connection interface 857 is an interface for connecting the base station apparatus 850 (radio communication interface 855) to the RRH 860. The connection interface 857 may also be a communication module for communication in the above-described high speed line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high speed line.

The radio communication interface 863 transmits and receives wireless signals via the antenna 840. The radio communication interface 863 may typically include, for example, an RF circuit 864. The RF circuit 864 may include, for example, a mixer, a filter and an amplifier, and transmits and receives wireless signals via the antenna 840. The radio communication interface 863 may include multiple RF circuits 864, as shown in Figure 10. For example, the multiple RF circuits 864 may support multiple antenna elements. Although Figure 10 shows the example in which the radio communication interface 863 includes multiple RF circuits 864, the radio communication interface 863 may include a single RF circuit 864.

In the eNB 830 shown in Figure 10, the communication unit 102 and the transceiver of the electronic apparatus 100 may be implemented by the radio communication interface 855 and/or the radio communication interface 863. At least a part of the functions may be implemented by the controller 851. For example, the controller 851 may perform the functions of the generation unit 101 and the communication unit 102 to indicate the unified TCI state through the DCI.

### [Application Example Regarding User Equipment]

### (First application example)

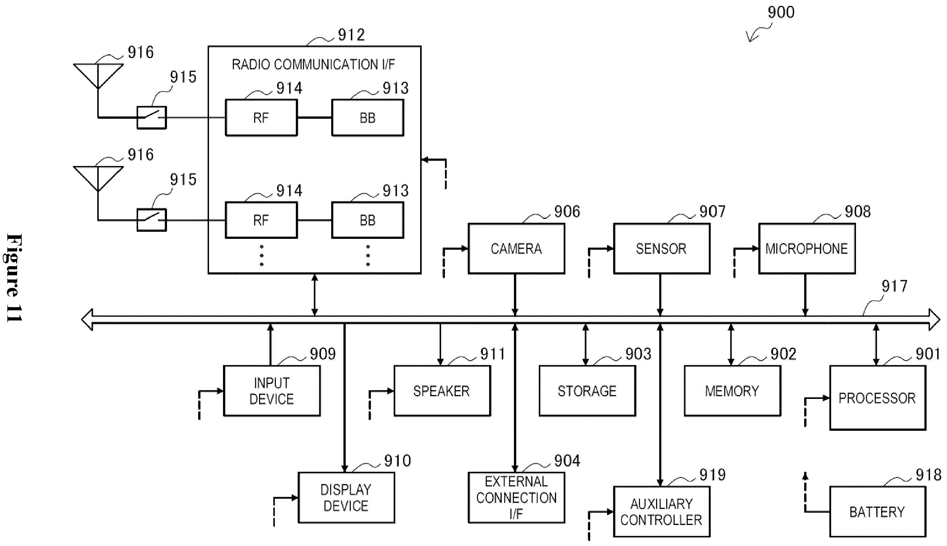

Figure 11 is a block diagram showing an exemplary configuration of a smartphone 900 to which the technology according to the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes a RAM and a ROM, and stores a program executed by the processor 901 and data. The storage 903 may include a storage medium such as a semiconductor memory and a hard disk. The external connection interface 904 is an interface for connecting an external device (such as a memory card and a universal serial bus (USB) device) to the smartphone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetism sensor, and an acceleration sensor. The microphone 908 converts sounds inputted to the smartphone 900 to audio signals. The input device 909 includes, for example, a touch sensor configured to detect touch onto a screen of the display device 910, a keypad, a keyboard, a button, or a switch, and receives an operation or information inputted from a user. The display device 910 includes a screen (such as a liquid crystal display (LCD) and an organic light-emitting diode (OLED) display), and displays an output image of the smartphone 900. The speaker 911 converts audio signals outputted from the smartphone 900 to sounds.

The radio communication interface 912 supports any cellular communication scheme (such as LTE and LTE-advanced), and performs wireless communications. The radio communication interface 912 may include, for example, a BB processor 913 and an RF circuit 914. The BB processor 913 may perform, for example, encoding/decoding, modulating/demodulating, and multiplexing/de-multiplexing, and perform various types of signal processing for wireless communication. The RF circuit 914 may include, for example, a mixer, a filter and an amplifier, and transmits and receives wireless signals via the antenna 916. It should be noted that although Figure 11 shows a case that one RF link is connected to one antenna, which is only illustrative, and a situation where one RF link is connected to multiple antennas through multiple phase shifters is also possible. The radio communication interface 912 may be a chip module having the BB processor 913 and the RF circuit 914 integrated thereon. The radio communication interface 912 may include multiple BB processors 913 and multiple RF circuits 914, as shown in Figure 11. Although Figure 11 shows the example in which the radio communication interface 912 includes multiple BB processors 913 and multiple RF circuits 914, the radio communication interface 912 may include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a wireless local area network (LAN) scheme. In this case, the radio communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennas 916 includes a single or multiple antenna elements (such as multiple antenna elements included in an MIMO antenna) and is used for the radio communication interface 912 to transmit and receive wireless signals. The smartphone 900 may include the multiple antennas 916, as shown in Figure 11. Although Figure 11 shows the example in which the smartphone 900 includes multiple antennas 916, the smartphone 900 may include a single antenna 916.

Furthermore, the smartphone 900 may include the antenna 916 for each wireless communication scheme. In this case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smartphone 900 shown in Figure 11 via feeder lines, which are partially shown as dashed lines in Figure 11. The auxiliary controller 919 operates a minimum necessary function of the smartphone 900, for example, in a sleep mode.

In the smartphone 900 shown in Figure 11, and the communication unit 201 and the transceiver of the electronic apparatus 200 may be implemented by the radio communication interface 912. At least a part of the functions may be implemented by the processor 901 or the auxiliary controller 919. For example, the processor 901 or the auxiliary controller 919 may perform the functions of the communication unit 201 and the determination unit 202 to enable the indication of the unified TCI state through the DCI.

### (Second application example)

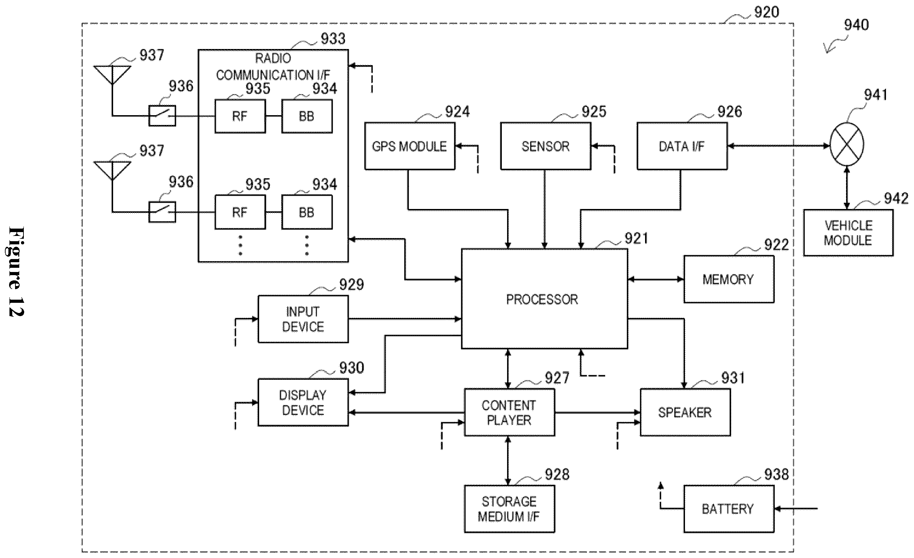

Figure 12 is a block diagram showing an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example a CPU or a SoC, and controls a navigation function and additional function of the car navigation apparatus 920. The memory 922 includes RAM and ROM, and stores a program executed by the processor 921, and data.

The GPS module 924 determines a position (such as latitude, longitude and altitude) of the car navigation apparatus 920 by using GPS signals received from a GPS satellite. The sensor 925 may include a group of sensors such as a gyro sensor, a geomagnetic sensor and an air pressure sensor. The data interface 926 is connected to, for example, an in-vehicle network 941 via a terminal that is not shown, and acquires data (such as vehicle speed data) generated by the vehicle.

The content player 927 reproduces content stored in a storage medium (such as a CD and DVD) that is inserted into the storage medium interface 928. The input device 929 includes, for example, a touch sensor configured to detect touch onto a screen of the display device 930, a button, or a switch, and receives an operation or information inputted from a user. The display device 930 includes a screen such as an LCD or OLED display, and displays an image of the navigation function or reproduced content. The speaker 931 outputs a sound for the navigation function or the reproduced content.

The radio communication interface 933 supports any cellular communication scheme (such as LTE and LTE-Advanced), and performs wireless communication. The radio communication interface 933 may typically include, for example, a BB processor 934 and an RF circuit 935. The BB processor 934 may perform, for example, encoding/decoding, modulating/demodulating and multiplexing/demultiplexing, and perform various types of signal processing for wireless communication. The RF circuit 935 may include, for example, a mixer, a filter and an amplifier, and transmits and receives wireless signals via the antenna 937. The radio communication interface 933 may also be a chip module having the BB processor 934 and the RF circuit 935 integrated thereon. The radio communication interface 933 may include multiple BB processors 934 and multiple RF circuits 935, as shown in Figure 12. Although Figure 12 shows the example in which the radio communication interface 933 includes multiple BB processors 934 and multiple RF circuits 935, the radio communication interface 933 may include a single BB processor 934 and a single RF circuit 935.

Furthermore, in addition to a cellular communication scheme, the radio communication interface 933 may support another type of wireless communication scheme such as a short-distance wireless communication scheme, a near field communication scheme, and a wireless LAN scheme. In this case, the radio communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication interface 933.

Each of the antennas 937 includes a single or multiple antenna elements (such as multiple antenna elements included in an MIMO antenna), and is used for the radio communication interface 933 to transmit and receive wireless signals. As shown in Figure 12, the car navigation apparatus 920 may include multiple antennas 937. Although Figure 12 shows the example in which the car navigation apparatus 920 includes multiple antennas 937, the car navigation apparatus 920 may include a single antenna 937.

Furthermore, the car navigation apparatus 920 may include the antenna 937 for each wireless communication scheme. In this case, the antenna switches 936 may be omitted from the configuration of the car navigation apparatus 920.

The battery 938 supplies power to the blocks of the car navigation apparatus 920 shown in Figure 12 via feeder lines that are partially shown as dash lines in Figure 12. The battery 938 accumulates power supplied from the vehicle.

In the car navigation apparatus 920 shown in Figure 12, the communication unit 201 and the transceiver of the electronic apparatus 200 may be implemented by the radio communication interface 933. At least a part of the functions may be implemented by the processor 921. For example, the processor 921 may perform the functions of the communication unit 201 and the determination unit 202 to enable the indication of the unified TCI state through the DCI.

The technology according to the present disclosure may also be implemented as an in-vehicle system (or a vehicle) 940 including one or more blocks of the car navigation apparatus 920, the in-vehicle network 941, and a vehicle module 942. The vehicle module 942 generates vehicle data (such as vehicle speed, engine speed, and failure information), and outputs the generated data to the in-vehicle network 941.

The basic principle of the present disclosure has been described above in conjunction with particular embodiments. However, as can be appreciated by those ordinarily skilled in the art, all or any of the steps or components of the method and apparatus according to the disclosure can be implemented with hardware, firmware, software or a combination thereof in any computing device (including a processor, a storage medium, etc.) or a network of computing devices by those ordinarily skilled in the art in light of the disclosure of the disclosure and making use of their general circuit designing knowledge or general programming skills.

Moreover, the present disclosure further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present disclosure. The memory medium includes but is not limited to soft disc, optical disc, magnetic optical disc, memory card, memory stick and the like.

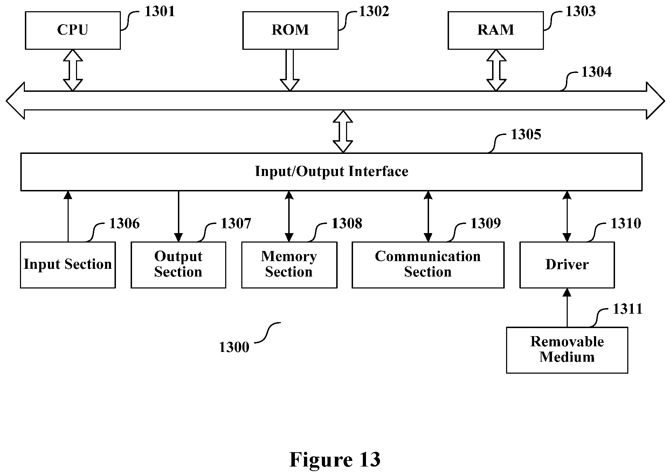

In the case where the present disclosure is realized with software or firmware, a program constituting the software is installed in a computer with a dedicated hardware structure (e.g. the general computer 1300 shown in Figure 13) from a storage medium or network, wherein the computer is capable of implementing various functions when installed with various programs.

In Figure 13, a central processing unit (CPU) 1301 executes various processing according to a program stored in a read-only memory (ROM) 1302 or a program loaded to a random access memory (RAM) 1303 from a memory section 1308. The data needed for the various processing of the CPU 1301 may be stored in the RAM 1303 as needed. The CPU 1301, the ROM 1302 and the RAM 1303 are linked with each other via a bus 1304. An input/output interface 1305 is also linked to the bus 1304.

The following components are linked to the input/output interface 1305: an input section 1306 (including keyboard, mouse and the like), an output section 1307 (including displays such as a cathode ray tube (CRT), a liquid crystal display (LCD), a loudspeaker and the like), a memory section 1308 (including hard disc and the like), and a communication section 1309 (including a network interface card such as a LAN card, modem and the like). The communication section 1309 performs communication processing via a network such as the Internet. A driver 1310 may also be linked to the input/output interface 1305, if needed. If needed, a removable medium 1311, for example, a magnetic disc, an optical disc, a magnetic optical disc, a semiconductor memory and the like, may be installed in the driver 1310, so that the computer program read therefrom is installed in the memory section 1308 as appropriate.

In the case where the foregoing series of processing is achieved through software, programs forming the software are installed from a network such as the Internet or a memory medium such as the removable medium 1311.

It should be appreciated by those skilled in the art that the memory medium is not limited to the removable medium 1311 shown in Figure 13, which has program stored therein and is distributed separately from the apparatus so as to provide the programs to users. The removable medium 1311 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 1302 and the memory section 1308 in which programs are stored, and can be distributed to users along with the device in which they are incorporated.

To be further noted, in the apparatus, method and system according to the present disclosure, the respective components or steps can be decomposed and/or recombined. These decompositions and/or re-combinations shall be regarded as equivalent solutions of the disclosure. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ......" in which an element is defined will not preclude presence of an additional identical element(s) in a process, method, article or device comprising the defined element(s)" unless further defined.

Although the embodiments of the present disclosure have been described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

## Claims

1. An electronic apparatus for wireless communications, comprising:
processing circuitry, configured to:
generate downlink control information for indicating a unified transmission configuration indication (TCI) state, wherein the downlink control information comprises at least one of downlink control information for uplink scheduling and newly defined downlink control information, and the unified TCI state is used to indicate both an uplink beam and a downlink beam; and
transmit the downlink control information to user equipment.

2. The electronic apparatus according to claim 1, wherein the downlink control information comprises the downlink control information for uplink scheduling, and the downlink control information for uplink scheduling comprises a sounding reference signal resource indicator and a unified TCI state identifier.

3. The electronic apparatus according to claim 2, wherein the unified TCI state identifier is used to indicate a beam for a physical uplink shared channel, and the sounding reference signal resource indicator is used to at least indicate uplink power control for the physical uplink shared channel and transmission antenna port selection for the physical uplink shared channel.

4. The electronic apparatus according to claim 2, wherein the downlink control information for uplink scheduling is obtained by extending DCI format 0_1/0_2.

5. The electronic apparatus according to claim 1, wherein the downlink control information comprises the downlink control information for uplink scheduling, and the downlink control information for uplink scheduling comprises a sounding reference signal resource indicator, and the sounding reference signal resource indicator is associated with the unified TCI state.

6. The electronic apparatus according to claim 5, wherein the processing circuitry is further configured to associate the sounding reference signal resource indicator with the unified TCI state through high-level signaling.

7. The electronic apparatus according to claim 6, wherein the high-level signaling comprises radio resource control signaling or a media access control control element.

8. The electronic apparatus according to claim 1, wherein the downlink control information comprises the newly defined downlink control information, and the newly defined downlink control information is dedicated to indicating the unified TCI state and comprises at least a unified TCI state identifier.

9. The electronic apparatus according to claim 8, wherein the newly defined downlink control information further comprises one or more of:
a channel/signal application, for indicating an uplink and downlink channel/signal and a component carrier or a bandwidth part where the uplink and downlink channel/signal is;
a physical uplink control channel resource identifier, for indicating physical uplink control channel resources used by the user equipment in feeding back a hybrid automatic retransmission request acknowledgement (HARQ-ACK);
a physical downlink control channel-to-physical uplink control channel timing, for indicating a time period from transmitting the newly defined downlink control information to transmitting, by the user equipment, a physical uplink control channel to feedback the HARQ-ACK; and
a channel status information request field, for aperiodically triggering a downlink channel status information feedback.

10. The electronic apparatus according to claim 8, wherein the processing circuitry is further configured to scramble the newly defined downlink control information with a radio network temporary indicator.

11. The electronic apparatus according to claim 9, wherein the processing circuitry is further configured to receive a parameter of BeamApplicationTiming from the user equipment, wherein the parameter of BeamApplicationTiming indicates a time period required from the user equipment transmitting the HARQ-ACK to the unified TCI state indicated by the newly defined downlink control information being applied.

12. The electronic apparatus according to claim 8, wherein the downlink control information further comprises the downlink control information for uplink scheduling, the downlink control information for uplink scheduling comprises a sounding reference signal resource indicator for indicating sounding reference signal resources, and the unified TCI state identifier is used to indicate a spatial relation of the sounding reference signal resources.

13. The electronic apparatus according to claim 1, wherein the processing circuitry is further configured to apply a hybrid automatic retransmission request (HARQ) mechanism to improve transmission reliability of the downlink control information.

14. The electronic apparatus according to claim 13, wherein the downlink control information comprises the downlink control information for uplink scheduling, and the processing circuitry is configured to apply the HARQ mechanism as follows:
in a case that the user equipment correctly receives the downlink control information for uplink scheduling and a base station correctly receives a physical uplink shared channel transmitted by the user equipment, feeding back an HARQ-ACK to the user equipment;
in a case that the user equipment does not correctly receive the downlink control information for uplink scheduling and thus cannot transmit the physical uplink shared channel, feeding back an HARQ-NACK to the user equipment; and
in a case that the user equipment correctly receives the downlink control information for uplink scheduling and the base station does not correctly receive the physical uplink shared channel transmitted by the user equipment, feeding back an HARQ-ACK for the downlink control information for uplink scheduling and an HARQ-NACK for the physical uplink shared channel to the user equipment.

15. The electronic apparatus according to claim 14, wherein the HARQ-ACK and the HARQ-NACK are comprised in other downlink control information after the downlink control information for uplink scheduling.

16. The electronic apparatus according to claim 13, wherein the downlink control information comprises the newly defined downlink control information, and the processing circuitry is further configured to:
receive an HARQ-ACK from the user equipment in a case that the user equipment correctly receives the newly defined downlink control information;
not receive a feedback for HARQ from the user equipment in a case that the user equipment does not correctly receive the newly defined downlink control information; and
receive an HARQ-NACK for the newly defined downlink control information from the user equipment in a case that the user equipment does not correctly receive the newly defined downlink control information, but correctly receives other downlink control information for downlink scheduling and feeds back an HARQ-ACK.

17. The electronic apparatus according to claim 1, wherein the downlink control information comprises a Quasi CoLocation (QCL) type for uplink, and the Quasi CoLocation type comprises one or more of:
a QCL Type X, for defining that two reference signals have a same time advance;
a QCL Type Y, for defining that two reference signals have a same path loss; and
a QCL Type Z, for defining a direction in which the uplink beam is transmitted.

18. An electronic apparatus for wireless communications, comprising:
processing circuitry, configured to:
receive downlink control information for indicating a unified transmission configuration indication (TCI) state from a base station, wherein the downlink control information comprises at least one of downlink control information for uplink scheduling and newly defined downlink control information, and the unified DCI state is used to indicate both an uplink beam and a downlink beam; and
determine the unified TCI state based on the downlink control information.

19. The electronic apparatus according to claim 18, wherein the downlink control information comprises the downlink control information for uplink scheduling, and the downlink control information for uplink scheduling comprises a sounding reference signal resource indicator and a unified TCI state identifier.

20. The electronic apparatus according to claim 19, wherein the unified TCI state identifier is used to indicate a beam for a physical uplink shared channel, and the sounding reference signal resource indicator is used to at least indicate uplink power control for the physical uplink shared channel and transmission antenna port selection for the physical uplink shared channel.

21. The electronic apparatus according to claim 18, wherein the downlink control information comprises the downlink control information for uplink scheduling, the downlink control information for uplink scheduling comprises a sounding reference signal resource indicator, and the sounding reference signal resource indicator is associated with the unified TCI state.

22. The electronic apparatus according to claim 21, wherein the processing circuitry is further configured to receive high-level signaling that associates the sounding reference signal resource indicator with the unified TCI state, wherein the high-level signaling comprises radio resource control signaling or a media access control control element.

23. The electronic apparatus according to claim 18, wherein the downlink control information comprises the newly defined downlink control information, and the newly defined downlink control information is dedicated to indicating the unified TCI state and comprises at least a unified TCI state identifier.

24. The electronic apparatus according to claim 23, wherein the newly defined downlink control information further comprises one or more of:
a channel/signal application, for indicating an uplink and downlink channel/signal and a component carrier or a bandwidth part where the uplink and downlink channel/signal is;
a physical uplink control channel resource identifier, for indicating physical uplink control channel resources used by the user equipment in feeding back a hybrid automatic retransmission request acknowledgement (HARQ-ACK);
a physical downlink control channel-to-physical uplink control channel timing, for indicating a time period from transmitting the newly defined downlink control information to transmitting, by the user equipment, a physical uplink control channel to feedback the HARQ-ACK; and
a channel status information request field, for aperiodically triggering a downlink channel status information feedback.

25. The electronic apparatus according to claim 24, wherein the processing circuitry is further configured to transmit a parameter of BeamApplicationTiming to the base station, wherein the parameter of BeamApplicationTiming indicates a time period from transmitting, by the user equipment, the HARQ-ACK to the unified TCI state indicated by the newly defined downlink control information being applied.

26. The electronic apparatus according to claim 23, wherein the downlink control information further comprises the downlink control information for uplink scheduling, the downlink control information for uplink scheduling comprises a sounding reference signal resource indicator for indicating sounding reference signal resources, and the unified TCI state identifier indicates a spatial relation of the sounding reference signal resources.

27. The electronic apparatus according to claim 18, wherein the processing circuitry is further configured to apply a hybrid automatic retransmission request (HARQ) mechanism to improve transmission reliability of the downlink control information.

28. The electronic apparatus according to claim 27, wherein the downlink control information comprises the downlink control information for uplink scheduling, and the processing circuitry is configured to apply the HARQ mechanism as follows:
in a case that the downlink control information for uplink scheduling is correctly received and the base station correctly receives a physical uplink shared channel transmitted by user equipment, receiving an HARQ-ACK from the base station;
in a case that the user equipment does not correctly receive the downlink control information for uplink scheduling and thus cannot transmit the physical uplink shared channel, receiving an HARQ-NACK from the base station; and
in a case that the downlink control information for uplink scheduling is correctly received and the base station does not correctly receive a physical uplink shared channel transmitted by the user equipment, receiving an HARQ-ACK for the downlink control information for uplink scheduling and an HARQ-NACK for the physical uplink shared channel from the base station.

29. The electronic apparatus according to claim 28, wherein the HARQ-ACK and the HARQ-NACK are comprised in other downlink control information after the downlink control information for uplink scheduling.

30. The electronic apparatus according to claim 27, wherein the downlink control information comprises the newly defined downlink control information, and the processing circuitry is further configured to:
in a case that the newly defined downlink control information is correctly received, transmit an HARQ-ACK to the base station;
in a case that the newly defined downlink control information is not correctly received, not transmit a feedback for HARQ to the base station; and
in a case that the newly defined downlink control information is not correctly received but other downlink control information for downlink scheduling is correctly received, transmit an HARQ-ACK for the other downlink control information while transmitting an HARQ-NACK for the newly defined downlink control information to the base station.

31. A method for wireless communications, comprising:
generating downlink control information for indicating a unified transmission configuration indication (TCI) state, wherein the downlink control information comprises at least one of downlink control information for uplink scheduling and newly defined downlink control information, and the unified DCI state is used to indicate both an uplink beam and a downlink beam; and
transmitting the downlink control information to user equipment.

32. A method for wireless communications, comprising:
receiving downlink control information for indicating a unified transmission configuration indication (TCI) state from a base station, wherein the downlink control information comprises at least one of downlink control information for uplink scheduling and newly defined downlink control information, and the unified DCI state is used to indicate both an uplink beam and a downlink beam; and
determining the unified TCI state based on the downlink control information.

33. A computer-readable storage medium with computer-executable instructions stored thereon, which when executed, cause the method for wireless communications according to claim 31 or 32 to be performed.
